# EUROPÄISCHE PATENTSCHRIFT

(11) **EP 4 411 425 B1**
(45) Veröffentlichungstag und Bekanntmachung des Hinweises auf die Patenterteilung: **12.02.2025**
(21) Anmeldenummer: 24175684.0
(22) Anmeldetag: 30.03.2023
(51) Int. Cl.: G01V 8/22, G01V 8/14

(54) **OPTOELEKTRONISCHER SENSOR**
OPTOELECTRONIC SENSOR
CAPTEUR OPTOÉLECTRONIQUE

(30) Priorität: 13.06.2022 DE 102022114792
(43) Veröffentlichungstag der Anmeldung: 07.08.2024
(62) Teilanmeldung aus: 23165408.8
(73) Patentinhaber: SICK AG, 79183 Waldkirch (DE)
(72) Erfinder: NÜBLING, Ralf Ulrich, 79211 Denzlingen (DE)
(74) Vertreter: Manitz Finsterwald Patent- und Rechtsanwaltspartnerschaft mbB

(56) Entgegenhaltungen:
- CN-A- 110 441 936
- DE-B4- 102007 063 703
- DE-T2- 68 909 663
- JP-A- 2011 193 205
- US-A1- 2014 036 352

## Beschreibung

Die vorliegende Erfindung betrifft einen optoelektronischen Sensor, umfassend eine Lichteintrittsöffnung und wenigstens einen Lichtempfänger zum Erfassen von Empfangslichtsignalen und zum Umwandeln der Empfangslichtsignale in elektrische Empfangssignale, wobei sich zwischen der Lichteintrittsöffnung und dem wenigstens einen Lichtempfänger ein Empfangslichtpfad erstreckt, welcher ein Umlenkelement mit einer vorderen und einer hinteren Reflexionsfläche aufweist, wobei das Umlenkelement derart ausgebildet ist, dass ein Teil der Empfangslichtsignale an der vorderen Reflexionsfläche und ein anderer Teil der Empfangslichtsignale an der hinteren Reflexionsfläche reflektiert werden.

Gattungsgemäße und gattungsähnliche optoelektronische Sensoren können in vielfältiger Weise ausgestaltet sein und für unterschiedliche Verwendungszwecke eingesetzt werden. Optoelektronische Sensoranordnungen können beispielsweise einen Lichtsender umfassen, welcher Lichtsignale in einen Überwachungsbereich aussendet, die von einem ggf. in dem Überwachungsbereich anwesenden Objekt in Richtung des optoelektronischen Sensors reflektiert oder remittiert werden und von dem Lichtempfänger des Sensors erfasst werden. Bei manchen Ausgestaltungen können zusätzlich zu einer bloßen Anwesenheit eines Objekts im Überwachungsbereich auch bestimmte Eigenschaften des Objekts, beispielsweise dessen Oberflächeneigenschaften oder Größe, erfasst werden. Derartige Anordnungen werden auch als Lichttaster bezeichnet. Bei anderen Sensoranordnungen wird ein Sendelichtstrahl in Richtung eines Reflektors, insbesondere Retroreflektors ausgesendet und von diesem in Richtung des optoelektronischen Sensors reflektiert. Eine Unterbrechung des Lichtpfades kann von dem optoelektronischen Sensor registriert werden. Eine derartige Sensoranordnung wird auch als Lichtschranke bezeichnet. Eine Anordnung von mehreren Lichtschranken wird als Lichtvorhang oder Lichtgitter bezeichnet. Weitere beispielhafte Sensoranordnungen umfassen so genannte Laserscanner, bei denen die Sendelichtsignale periodisch in unterschiedliche Raumrichtungen abgelenkt werden, beispielsweise mithilfe von rotierenden Spiegeln oder Schwenkspiegeln. Hierdurch können auch größere zwei- oder dreidimensionale Raumbereiche ortsaufgelöst überwacht werden.

Bei vielen optoelektronischen Sensoranordnungen kann zusätzlich auch eine Ermittlung des Abstandes eines erfassten Objekts vorgesehen sein, beispielsweise durch Ermittlung einer Lichtlaufzeit, einer Phasenlage oder auch mittels Triangulation.

Oftmals werden bei optoelektronischen Sensoranordnungen im Sendelichtpfad und/oder im Empfangslichtpfad Umlenkspiegel oder Faltspiegel angeordnet, um die optischen Strahlengänge vorteilhaft umzulenken oder zu falten. Hierdurch kann insbesondere der notwendige Bauraum für die Sensoranordnung reduziert werden oder an bestimmte komplexe Einbausituationen angepasst werden. Des Weiteren kann eine Umlenkung oder Faltung des optischen Strahlengangs auch erforderlich sein, um verschiedene optische Elemente in den Strahlengang einzubeziehen. Unter einem Faltspiegel wird zumeist ein Spiegel verstanden, der derart in den optischen Strahlengang integriert ist, dass hier eine Umlenkung um in der Regel 180° erfolgt, d. h. der Strahlengang in sich zurückgeworfen wird. Umlenkspiegel bewirken in der Regel eine Umlenkung um einen von 180° verschiedenen Winkel, bevorzugt um 90° oder auch um andere Winkel im Bereich zwischen mehr als 0° und weniger als 180°.

In EP 1 931 133 A1 wird ein Verfahren und eine Vorrichtung zur optischen Erfassung einer Struktur mittels eines Bildaufnehmers beschrieben, bei welchem ein in dem Abbildungsstrahlengang angeordnetes optisches Element die Struktur in wenigstens zwei voneinander getrennten und gegeneinander versetzten Bereichen des Bildaufnehmers abbildet. Dadurch kann eine Struktur, die eine große Längserstreckung hat, in mehrere aufeinanderfolgende Teilabschnitte zerlegt und mit einer einzigen Aufnahme von dem Bildaufnehmer erfasst werden. Diese Zerlegung kann beispielsweise mithilfe einer planparallelen, doppelt reflektierenden Umlenkplatte erfolgen.

Verschiedene optoelektronische Anordnungen, bei denen Umlenkelemente mit einer vorderen und einer hinteren Reflexionsfläche im Strahlengang angeordnet sind, sind beispielsweise in DE 689 09 663 T2 und JP 2011-193 205 A offenbart.

Es ist die Aufgabe der Erfindung, einen optoelektronischen Sensor mit einem Umlenkelement im Strahlengang zu schaffen, dessen Funktionalität und Leistungsfähigkeit gegenüber herkömmlichen Sensoren verbessert ist.

Die Lösung erfolgt durch einen optoelektronischen Sensor mit den Merkmalen des Anspruchs 1. Erfindungsgemäß ist vorgesehen, dass die vordere Reflexionsfläche zumindest teilweise eine Filterschicht aufweist, welche Empfangslichtsignale in Abhängigkeit von ihrer Wellenlänge und/oder Polarisierungsrichtung reflektiert oder durchlässt.

Bei dem erfindungsgemäßen optoelektronischen Sensor können somit Empfangslichtsignale einer ersten Wellenlänge und/oder Polarisationsrichtung an der vorderen Reflexionsfläche reflektiert werden, während Empfangslichtsignale einer zweiten Wellenlänge und/oder Polarisationsrichtung an der hinteren Reflexionsfläche reflektiert werden. Das Umlenkelement ist hierbei derart ausgebildet, dass Empfangslichtsignale, die an der hinteren Reflexionsfläche reflektiert werden, zweimal von der vorderen Reflexionsfläche durchgelassen werden, und zwar auf dem Hinzu und dem Rückweg von der hinteren Reflexionsfläche. Durch die Reflexion der Empfangslichtsignale in Abhängigkeit von ihrer Wellenlänge und/oder Polarisationsrichtung entweder an der vorderen oder der hinteren Reflexionsfläche können die Empfangslichtsignale insbesondere räumlich voneinander getrennt werden, was beispielsweise dazu benutzt werden kann, die Empfangslichtsignale wellenlängenabhängig und/oder polarisationsrichtungsabhängig auszuwerten. Es versteht sich, dass die vordere und die hintere Reflexionsfläche um ein bestimmtes Maß voneinander beabstandet sind. Der Begriff "Licht" soll hier je nach Anwendung elektromagnetische Strahlung insbesondere aus dem sichtbaren, dem ultravioletten und/oder dem infraroten Wellenlängenbereich umfassen.

Der optoelektronische Sensor kann neben den genannten Elementen noch weitere optische Elemente wie Linsen, Prismen oder Spiegel aufweisen, die vor und/oder hinter dem Umlenkelement, bezogen auf die Ausbreitungsrichtung der Empfangslichtsignale, angeordnet sind. Beispielsweise kann die genannte Lichteintrittsöffnung durch eine im Empfangslichtpfad angeordnete Optik oder Linse oder auch durch eine Blende definiert sein.

Die in Abhängigkeit von der gewünschten Funktionalität ausgestaltete Filterschicht kann in grundsätzlich bekannter Weise hergestellt werden. So kann beispielsweise die Filterschicht in Form eines ein- oder mehrschichtigen Aufbaus durch Aufdampfen oder Vakuumabscheidung geeigneter Substanzen direkt auf dem Umlenkelement hergestellt werden. Die Filterschicht kann auch in Form einer Folie auf dem Umlenkelement aufgebracht werden. Das Umlenkelement selbst ist vorzugsweise transparent für den Wellenlängenbereich des Empfangslichtes, der zum Beispiel durch ein gegebenenfalls verwendetes Lichtsendeelement vorgegeben ist, und kann beispielsweise aus Glas oder Kunststoff, z. B. aus PMMA, hergestellt sein.

Ein Anwendungsbeispiel für den erfindungsgemäßen optoelektronischen Sensor besteht in einer Differenzierung der Empfangslichtsignale nach ihrer Polarisationsrichtung. Dies kann beispielsweise dazu dienen, bei Lichttastern, welche zur Erfassung von ggf. in einem Überwachungsbereich vorhandenen Objekten vorhanden sind, eine zusätzliche Unterscheidung nach ihrer Oberflächenbeschaffenheit vorzunehmen. Während unpolarisiertes Sendelicht bei einer Reflexion an einem glänzenden Objekt zumindest teilweise polarisiert wird, ändert eine Reflexion an einer matten Objektoberfläche die Polarisation des reflektierten Sendelichts in der Regel nicht.

Die weitere Ausgestaltung des erfindungsgemäßen optoelektronischen Sensors kann in vielfältiger Weise erfolgen, insbesondere entsprechend der vorstehenden Aufzählung von gattungsgemäßen und gattungsähnlichen optoelektronischen Sensoren, wobei diese Aufzählung rein beispielhaft und nicht abschließend ist. Die Einsatzgebiete für gattungsgemäße und gattungsähnliche optoelektronische Sensoren sind dem Fachmann bekannt und deren konstruktive Ausgestaltungen im einschlägigen Stand der Technik beschrieben.

Gemäß einer vorteilhaften Ausführungsform umfasst der optoelektronische Sensor einen ersten und einen zweiten Lichtempfänger, wobei die Lichtempfänger und das Umlenkelement derart ausgestaltet und angeordnet sind, dass an der vorderen Reflexionsfläche reflektierte Empfangslichtsignale von dem ersten Lichtempfänger und an der hinteren Reflexionsfläche reflektierte Empfangslichtsignale von dem zweiten Lichtempfänger erfasst werden. Hierdurch wird es möglich, die nach Wellenlänge und/oder Polarisationsrichtung getrennten Empfangslichtsignale auch getrennt voneinander zu erfassen und auszuwerten. Die beiden Lichtempfänger können beispielsweise in einer gemeinsamen Ebene, zum Beispiel auf einer gemeinsamen Leiterplatte angeordnet sein, was den Fertigungsaufwand reduziert. Zwischen dem ersten und dem zweiten Lichtempfänger kann in Abhängigkeit von der Ausgestaltung des Umlenkelements und der geometrischen Anordnung der Elemente des optoelektronischen Sensors ein bestimmter Abstand vorgesehen sein.

Gemäß einer weiteren vorteilhaften Ausführungsform ist die Filterschicht nur auf zumindest einem Teilbereich der vorderen Reflexionsfläche vorgesehen. Der zumindest eine Teilbereich kann beispielsweise ringförmig sein, insbesondere in Form von mehreren konzentrischen Ringen. Des Weiteren ist auch eine streifenförmige Anordnung möglich, wobei jeder Streifen als ein Teilbereich angesehen wird. Des Weiteren ist auch eine schachbrettmusterartige Anordnung der Teilbereiche möglich. Der verbleibende Teil der vorderen Reflexionsfläche weist keine Filterschicht auf, wobei jedoch auch eine andere Art von Beschichtung vorgesehen sein kann, die von der genannten Filterschicht verschieden ist. Durch die Beschichtung nur von einem oder mehreren Teilbereichen mit der Filterschicht können unterschiedliche Erfassungszonen für die Empfangslichtsignale realisiert werden, beispielsweise eine Unterteilung in eine Nahzone und eine Fernzone.

Gemäß einer weiteren vorteilhaften Ausführungsform sind die vordere Reflexionsfläche und die hintere Reflexionsfläche plan. In dem Fall wird der Konvergenz- bzw. Divergenzwinkel der Empfangslichtsignale durch das Umlenkelement nicht beeinflusst. Bei einem konvergenten Strahlengang werden die Empfangslichtsignale in Abhängigkeit davon, an welcher Reflexionsfläche sie reflektiert wurden, in voneinander beabstandete Fokusebenen oder Fokuspunkte abgebildet, wobei der Abstand der Fokusebenen u.a. von der Länge des optischen Wegs innerhalb des Umlenkelements abhängt.

Gemäß einer weiteren vorteilhaften Ausführungsform verlaufen die vordere Reflexionsfläche und die hintere Reflexionsfläche geneigt zueinander. Dies hat sich insbesondere im Zusammenhang mit der vorstehend beschriebenen Ausführungsform, bei welcher der optoelektronische Sensor einen ersten und einen zweiten Lichtempfänger umfasst, als vorteilhaft erwiesen, um beide Lichtempfänger mit den nach Wellenlänge und/oder Polarisationsrichtung separierten Empfangslichtsignalen zu beaufschlagen. Bevorzugt sind beide Reflexionsflächen plan, verlaufen aber aufgrund der Neigung nicht parallel zueinander. Gemäß einer alternativen Ausführungsform können jedoch auch beide Reflexionsflächen parallel zueinander verlaufen.

Gemäß einer weiteren vorteilhaften Ausführungsform ist zumindest eine der Reflexionsflächen, bevorzugt die hintere Reflexionsfläche, gewölbt, bevorzugt konkav. Hierdurch ist es insbesondere möglich, die Fokusebenen, in welche die Empfangslichtsignale in Abhängigkeit von ihrer Wellenlänge bzw. Polarisationsrichtung abgebildet werden, stärker voneinander zu trennen, als dies beispielsweise alleine durch den optischen Weg innerhalb des Umlenkelements, welcher durch dessen Winkelausrichtung und Dicke bestimmt ist, möglich wäre. Grundsätzlich kann jedoch das Umlenkelement zusätzlich zur umlenkenden und separierenden Funktion auch eine strahlformende Funktion erfüllen, wodurch sich die Anzahl an erforderlichen optischen strahlformenden Elementen reduzieren lässt und insbesondere auch die Baulänge bzw. der Bauraum verringern lässt. Es können auch beide Reflexionsfläche gewölbt sein, bevorzugt mit unterschiedlichen Krümmungsradien, sodass sich die Brennweiten der beiden Reflexionsfläche voneinander unterscheiden.

Gemäß einer weiteren vorteilhaften Ausführungsform beträgt der Umlenkwinkel, unter dem die Empfangslichtsignale umgelenkt werden, 90° oder 180°, oder zumindest im Wesentlichen 90° bzw. 180°. Wenn der Umlenkwinkel z.B. 90° beträgt, erfüllt das Umlenkelement die Funktion eines klassischen Umlenkspiegels, wobei der einfallende und ausfallende Strahlengang in einem rechten Winkel zueinander stehen. Wenn der Umlenkwinkel 180° beträgt, entspricht dies der Funktion eines Faltspiegels, bei welchem der ausfallende Strahlengang auf den einfallenden Strahlengang zurückgeworfen wird. Dies wird vornehmlich zur Verkürzung der Baulänge eingesetzt.

Gemäß einer weiteren vorteilhaften Ausführungsform weist die hintere Reflexionsfläche eine reflektierende Beschichtung auf, z.B. eine aufgedampfte Metallschicht. Hierdurch kann der Anteil des an der hinteren Reflexionsfläche reflektierten Empfangslichts gesteigert werden.

Gemäß einer weiteren vorteilhaften Ausführungsform sind die Reflexionseigenschaften der Filterschicht hinsichtlich ihrer Selektivität für eine Wellenlänge und/oder eine Polarisationsrichtung in Ansprechen auf ein elektrisches Steuersignal veränderbar. Eine derartige aktive Beschichtung der vorderen Reflexionsfläche kann dann beispielsweise mithilfe einer elektrischen Spannung, welche an die Filterschicht angelegt wird, beeinflusst werden, um die optischen Eigenschaften des optoelektronischen Sensors in einer gewünschten Weise anzupassen.

Gemäß einer weiteren vorteilhaften Ausführungsform kann die hintere Reflexionsfläche stufenförmig ausgebildet sein. Somit hängt der optische Weg innerhalb des Umlenkelements auch vom Auftreffort eines Empfangslichtsignals auf dem Umlenkelement ab. Hierdurch können beispielsweise noch weitere Fokusebenen erzeugt werden.

Die vorliegende Erfindung betrifft in einem weiteren Aspekt, der jedoch nicht beansprucht ist, eine Lichtsenderanordnung zum Aussenden von Sendelicht in einen Überwachungsbereich, umfassend eine Lichtaustrittsöffnung und einen ersten Lichtsender, welcher zum Erzeugen von Sendelicht einer ersten Wellenlänge eingerichtet ist, und einen beabstandet vom ersten Lichtsender angeordneten zweiten Lichtsender, welcher zum Erzeugen von Sendelicht einer zweiten, von der ersten Wellenlänge verschiedenen Wellenlänge eingerichtet ist, wobei sich zwischen den Lichtsendern und der Lichtaustrittsöffnung ein Sendelichtpfad erstreckt, welcher ein Umlenkelement mit einer vorderen und einer hinteren Reflexionsfläche aufweist, welche geneigt zueinander verlaufen, wobei die vordere Reflexionsfläche eine Filterschicht aufweist, welche Sendelicht in Abhängigkeit von seiner Wellenlänge reflektiert oder durchlässt, und wobei die Lichtsender und das Umlenkelement derart ausgestaltet und angeordnet sind, dass von dem ersten Lichtsender erzeugtes Sendelicht an der vorderen Reflexionsfläche und von dem zweiten Lichtsender erzeugtes Sendelicht an der hinteren Reflexionsfläche derart reflektiert wird, dass sich das an den Reflexionsflächen reflektierte Sendelicht entlang einer gemeinsamen Sendelichtachse ausbreitet.

Somit erstrecken sich zwischen den Lichtsendern und dem Umlenkelement getrennte Teilabschnitte des Sendelichtpfads mit unterschiedlich verlaufenden Sendelichtachsen für jede Wellenlänge. Diese Sendelichtpfade oder Sendelichtachsen werden durch das Umlenkelement vereinigt, sodass sich zwischen dem Umlenkelement und der Lichtaustrittsöffnung ein gemeinsamer Teilabschnitt des Sendelichtpfads mit der gemeinsamen Sendelichtachse erstreckt. Der erfindungsgemäßen Lichtsenderanordnung liegt der Gedanke zugrunde, dass der bei dem oben beschriebenen erfindungsgemäßen optoelektronischen Sensor verwirklichte Grundgedanke auch in analoger Weise auf eine Lichtsenderanordnung übertragen werden kann, wobei sozusagen die Ausbreitungsrichtung der Lichtpfade umgekehrt wird.

Dabei können die vorstehend beschriebenen vorteilhaften Ausführungsformen des erfindungsgemäßen optoelektronischen Sensors, insbesondere diejenigen, die sich auf das Umlenkelement beziehen, in entsprechender und vorteilhafter Weise auch bei der erfindungsgemäßen Lichtsenderanordnung angewendet werden.

Das Umlenkelement kann in Bezug auf weitere Komponenten des optoelektronischen Sensors bzw. der Lichtsenderanordnung ortsfest oder auch verstellbar, insbesondere rotierbar, angeordnet sein.

Weitere vorteilhafte Ausführungsformen der Erfindung ergeben sich aus den Unteransprüchen, der Beschreibung und den Zeichnungen.

Die Erfindung wird nachfolgend anhand von Ausführungsbeispielen mit Bezug auf die Zeichnungen beschrieben.

Es zeigen:
- Fig. 1: eine schematische Ansicht eines optoelektronischen Sensors gemäß einem ersten Ausführungsbeispiel;
- Fig. 2: eine schematische Ansicht eines optoelektronischen Sensors gemäß einem zweiten Ausführungsbeispiel;
- Fig. 3: eine schematische Ansicht eines optoelektronischen Sensors gemäß einem dritten Ausführungsbeispiel;
- Fig. 4: eine schematische Ansicht eines optoelektronischen Sensors gemäß einem vierten Ausführungsbeispiel; und
- Fig. 5: eine schematische Ansicht eines optoelektronischen Sensors gemäß einem fünften Ausführungsbeispiel.

Im Folgenden werden gleiche oder gleichartige Elemente oder Komponenten mit denselben Bezugszeichen bezeichnet.

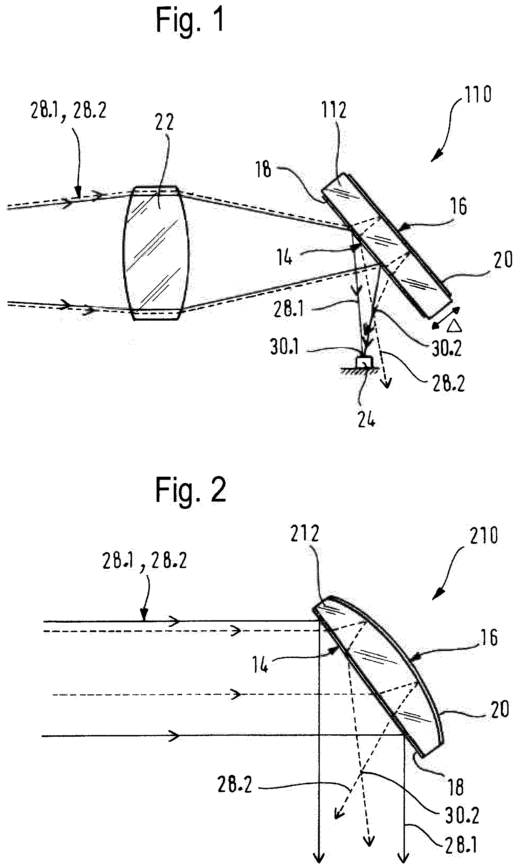

Fig. 1 bis 5 zeigen optoelektronische Sensoren 110 bis 510, welche ein jeweiliges Umlenkelement 112 bis 512 in unterschiedlicher Ausgestaltung umfassen. Jedes Umlenkelement 112 bis 512 weist eine vordere Reflexionsfläche 14 und eine davon beabstandete hintere Reflexionsfläche 16 auf. Auf der vorderen Reflexionsfläche 14 ist vollständig oder in ein oder mehreren Teilbereichen eine jeweilige Filterschicht 18 aufgebracht, welche auftreffendes Licht, d. h. Empfangslichtsignale und/oder Sendelichtsignale in Abhängigkeit von ihrer Wellenlänge und/oder Polarisationsrichtung reflektiert oder durchlässt. Die hintere Reflexionsfläche 16 kann eine reflektierende Beschichtung 20 aufweisen.

In Fig. 1 bis 5 sind in rein schematischer Weise Strahlengänge für von den optoelektronischen Sensoren 110 bis 510 erfasstes Empfangslicht 28.1, 28.2 dargestellt, wobei das Empfangslicht 28.1 eine erste Wellenlänge und das Empfangslicht 28.2 eine zweite, von der ersten Wellenlänge verschiedene Wellenlänge aufweist. Grundsätzlich kann das Empfangslicht 28.1 auch einen ersten Wellenlängenbereich und das Empfangslicht 28.2 einen zweiten Wellenlängenbereich aufweisen, wobei sich die beiden Wellenlängenbereiche nicht überlappen. Das Empfangslicht 28.1, 28.2 tritt durch eine nicht näher bezeichnete Lichteintrittsöffnung in den jeweiligen optoelektronischen Sensor 110 bis 510 ein. Die optoelektronischen Sensoren 110 bis 510 weisen eine jeweilige Empfangsoptik 22 zur Strahlformung des eintretenden Empfangslichts 28.1, 28.2 auf. Ferner weisen die optoelektronischen Sensoren 110 bis 510 entweder einen einzigen Lichtempfänger 24 oder einen ersten Lichtempfänger 24.1 und einen zweiten Lichtempfänger 24.2 auf, welche dazu eingerichtet sind, das auftreffende Empfangslicht 28.1 bzw. 28.2 in elektrische Signale umzuwandeln. In Fig. 2 sind die Empfangsoptik 22 und der oder die Lichtempfänger 24, 24.1, 24.2 nicht dargestellt.

Bei allen Ausführungsbeispielen beziehen sich die dargestellten Unterschiede zwischen dem Empfangslicht 28.1 und dem Empfangslicht 28.2 auf dessen Wellenlänge. Die Unterschiede zwischen dem jeweiligen Empfangslicht 28.1, 28.2 können sich aber alternativ oder zusätzlich auch auf dessen Polarisationsrichtung beziehen. So kann beispielsweise das Empfangslicht 28.1 eine horizontale Polarisation und das Empfangslicht 28.2 eine vertikale Polarisation aufweisen. Nachfolgend wird jedoch zum einfacheren Verständnis lediglich auf mögliche unterschiedliche Wellenlängen bzw. Wellenlängenbereiche Bezug genommen.

Das ggf. von der Empfangsoptik 22 fokussierte Empfangslicht 28.1, 28.2 trifft auf das Umlenkelement 112 bis 512, wobei das Empfangslicht 28.1 mit der ersten Wellenlänge an der vorderen Reflexionsfläche 14 und das Empfangslicht 28.2 mit der zweiten Wellenlänge an der hinteren Reflexionsfläche 16 reflektiert wird.

Mit Bezug auf die einzelnen Figuren werden im Folgenden die spezifischen Unterschiede der optoelektronischen Sensoren 110 bis 510 näher erläutert.

Bei dem optoelektronischen Sensor 110 gemäß Fig. 1 ist das Umlenkelement 112 als planparallele Platte ausgebildet. Da das Empfangslicht 28.2 mit zweiter Wellenlänge das Umlenkelement 112 zweimal durchlaufen muss, befindet sich die Fokusebene 30.2 des Empfangslichts 28.2 in der Ausbreitung des Lichts gesehen vor der Fokusebene 30.1 des Empfangslichts 28.1 mit erster Wellenlänge. Mit der dargestellten Geometrie wird das Empfangslicht 28.1 mit erster Wellenlänge fokussiert und das Empfangslicht 28.2 mit zweiter Wellenlänge defokussiert von dem Lichtempfänger 24 erfasst. Eine Unterscheidung des Empfangslichts 28.1, 28.2 nach der Wellenlänge kann beispielsweise durch Verwendung eines ortsauflösenden und/oder farbauflösenden Lichtempfängers 24 und eine entsprechende Auswertung erfolgen.

Bei dem optoelektronischen Sensor 210 gemäß Fig. 2 unterscheidet sich das Umlenkelement 212 von dem Umlenkelement 112 gemäß Fig. 1 dadurch, dass dessen hintere Reflexionsfläche 16 konkav gewölbt ist. Dadurch erhält das Umlenkelement 212 bezüglich des Empfangslichts 28.2 zusätzlich eine strahlformende Funktion, sodass das an der hinteren Reflexionsfläche 16 reflektierte Empfangslicht 28.2 mit zweiter Wellenlänge in einem Fokuspunkt 30.2 gebündelt wird, während das Empfangslicht 28.1, welches an der vorderen Reflexionsfläche 14 reflektiert wurde, seinen parallelen Strahlengang beibehält.

Gemäß einem nicht dargestellten Ausführungsbeispiel kann - wie vorstehend bereits erwähnt - eine Lichtsenderanordnung in Abwandlung des optoelektronischen Sensors 210 gemäß Fig. 2 geschaffen werden, indem die Ausbreitungsrichtung der Lichtpfade umgekehrt wird und die Lichtempfänger 24.1, 24.2 durch jeweilige Lichtsender ersetzt werden.

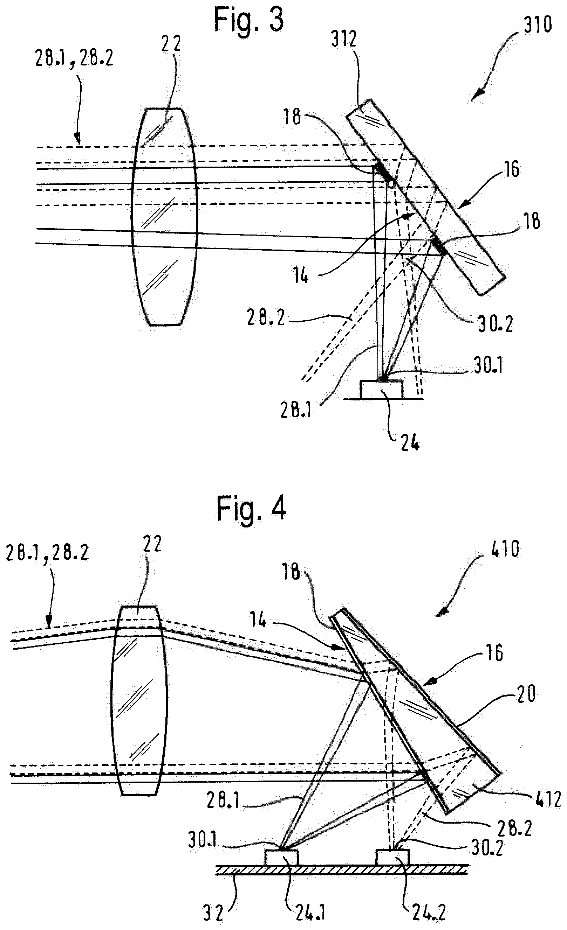

Bei dem optoelektronischen Sensor 310 gemäß Fig. 3 kommt wiederum ein als planparallele Platte ausgestaltetes Umlenkelement 312 zum Einsatz, wobei jedoch nicht die gesamte vordere Reflexionsfläche 14 eine Filterschicht 18 aufweist, sondern nur ein ringförmiger Teilbereich 18, welcher aufgrund der Schnittdarstellung in Fig. 3 als zwei Teilbereiche 18 erscheint. Wie eingangs erläutert wurde, können auch weitere Teilbereiche der vorderen Reflexionsfläche 14 mit einer Filterschicht 18 versehen werden. Auch bei diesem Ausführungsbeispiel weist das Empfangslicht 28.1, 28.2 in Abhängigkeit von der jeweiligen Reflexionsfläche 14, 16 unterschiedliche Fokuspunkte 30.1, 30.2 auf.

Der optoelektronische Sensor 410 gemäß Fig. 4 weist anstelle eines einzigen Lichtempfängers einen ersten Lichtempfänger 24.1 und einen zweiten Lichtempfänger 24.2 auf, welche in einem Abstand zueinander auf einem gemeinsamen Substrat 32 oder einer Leiterkarte angeordnet sind. Die vordere Reflexionsfläche 14 und die hintere Reflexionsfläche 16 des Umlenkelements 412 sind beide plan und verlaufen zueinander geneigt, sodass das Umlenkelement 412 eine keilförmige Gestalt aufweist.

Der Abstand der Lichtempfänger 24.1, 24.2, der Neigungswinkel zwischen den Reflexionsflächen 14, 16 sowie die Anordnung und Ausrichtung des Umlenkelements 412 im Strahlengang sind so gewählt, dass das Empfangslicht 28.1 vom ersten Lichtempfänger 24.1 und das Empfangslicht 28.2 von dem zweiten Lichtempfänger 24.2 erfasst wird. Die Fokuspunkte 30.1, 30.2 befinden sich auf dem jeweils zugeordneten Lichtempfänger 24.1, 24.2.

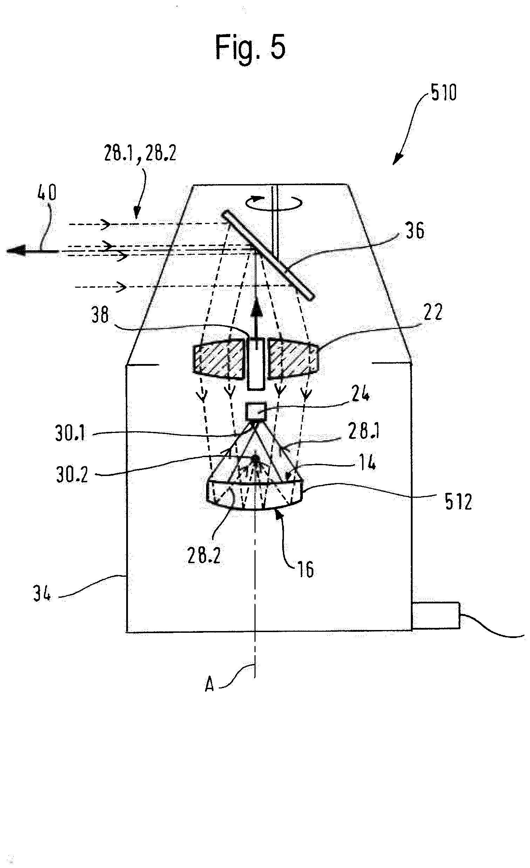

Der optoelektronische Sensor 510 gemäß Fig. 5 ist als (Laser-)Scanner ausgebildet. In einem Gehäuse 34 sind neben den eingangs beschriebenen Komponenten zusätzlich ein Lichtsender 38, z.B. ein Laser, und ein rotierender Umlenkspiegel 36 vorgesehen, welcher sowohl das von dem Lichtsender 38 emittierte Sendelicht 40 als auch das Empfangslicht 28.1, 28.2 jeweils um einen Winkel von 90° umlenkt, so dass ein flächiger kreisförmiger Überwachungsbereich periodisch abgetastet werden kann. Das Gehäuse 34 ist zumindest im Bereich des Lichteintritts und des Lichtaustritts transparent für den Wellenlängenbereich der verwendeten Strahlung. Die ringförmige Empfangsoptik 22 weist eine zentrale Ausnehmung zur Aufnahme des Lichtsenders 38 auf.

Das Umlenkelement 512 weist ähnlich wie das Umlenkelement 212 von Fig. 2 eine konkav gewölbte hintere Reflexionsfläche 16 auf. Der Lichtempfänger 24 ist zwischen dem Umlenkelement 512 und dem Lichtsender 38 angeordnet, wobei der Lichtsender 38, die Empfangsoptik 22, der Lichtempfänger 24 und das Umlenkelement 512 koaxial entlang einer optischen Achse A angeordnet sind. Bei dem optoelektronischen Sensor 510 befinden sich die Fokuspunkte 30.1, 30.2 in unterschiedlichen Abständen bezogen auf den Lichtempfänger 24, ähnlich wie bei den Ausführungsbeispielen gemäß Fig. 1 bis 3.

### Bezuaszeichenliste

- 110 - 510: optoelektronischer Sensor
- 112 - 512: Umlenkelement
- 14: vordere Reflexionsfläche
- 16: hintere Reflexionsfläche
- 18: Filterschicht
- 20: Beschichtung
- 22: Empfangsoptik
- 24, 24.1, 24.2: Lichtempfänger
- 28.1: Empfangslicht mit erster Wellenlänge
- 28.2: Empfangslicht mit zweiter Wellenlänge
- 30.1, 30.2: Fokuspunkt
- 32: Substrat
- 34: Gehäuse
- 36: Umlenkspiegel
- 38: Lichtsender
- 40: Sendelicht

- A: optische Achse

## Patentansprüche

1. Optoelektronischer Sensor (110 - 510), umfassend eine Lichteintrittsöffnung und wenigstens einen Lichtempfänger (24, 24.1, 24.2) zum Erfassen von Empfangslichtsignalen und zum Umwandeln der Empfangslichtsignale in elektrische Empfangssignale, wobei sich zwischen der Lichteintrittsöffnung und dem wenigstens einen Lichtempfänger (24, 24.1, 24.2) ein Empfangslichtpfad erstreckt, welcher ein Umlenkelement (112 - 512) mit einer vorderen und einer hinteren Reflexionsfläche (14, 16) aufweist, wobei das Umlenkelement (112 - 512) derart ausgebildet ist, dass ein Teil der Empfangssignale an der vorderen Reflexionsfläche (14) und ein anderer Teil der Empfangssignale an der hinteren Reflexionsfläche (16) reflektiert werden, wobei die vordere Reflexionsfläche (14) zumindest teilweise eine Filterschicht (18) aufweist, welche Empfangslichtsignale in Abhängigkeit von ihrer Wellenlänge und/oder Polarisationsrichtung reflektiert oder durchlässt, dass der optoelektronische Sensor (110 - 510) einen ersten und einen zweiten Lichtempfänger (24.1, 24.2) umfasst, wobei die Lichtempfänger (24.1, 24.2) und das Umlenkelement (112 - 512) derart ausgestaltet und angeordnet sind, wobei an der vorderen Reflexionsfläche (14) reflektierte Empfangslichtsignale von dem ersten Lichtempfänger (24.1) und an der hinteren Reflexionsfläche (16) reflektierte Empfangslichtsignale von dem zweiten Lichtempfänger (24.2) erfasst werden, **dadurch gekennzeichnet, dass** Empfangslichtsignale, die an der hinteren Reflexionsfläche reflektiert werden, zweimal von der vorderen Reflexionsfläche durchgelassen werden, und zwar auf dem Hinweg zu und dem Rückweg von der hinteren Reflexionsfläche, und
dass die vordere Reflexionsfläche (14) und die hintere Reflexionsfläche (16) geneigt zueinander verlaufen.

2. Optoelektronischer Sensor (110 - 510) nach Anspruch 1,
**dadurch gekennzeichnet,**
**dass** die Filterschicht (18) nur auf zumindest einem Teilbereich der vorderen Reflexionsfläche (14) vorgesehen ist.

3. Optoelektronischer Sensor (110 - 510) nach einem der vorhergehenden Ansprüche,
**dadurch gekennzeichnet,**
**dass** die vordere Reflexionsfläche (14) und die hintere Reflexionsfläche (16) plan sind.

4. Optoelektronischer Sensor (110 - 510) nach Anspruch 1 oder 2,
**dadurch gekennzeichnet,**
**dass** zumindest eine der Reflexionsflächen (14, 16), bevorzugt die hintere Reflexionsfläche (16), gewölbt, bevorzugt konkav, ist.

5. Optoelektronischer Sensor (110 - 510) nach einem der vorhergehenden Ansprüche,
**dadurch gekennzeichnet,**
**dass** der Umlenkwinkel, unter dem die Empfangslichtsignale umgelenkt werden, 90° oder 180° beträgt.

6. Optoelektronischer Sensor (110 - 510) nach einem der vorhergehenden Ansprüche,
**dadurch gekennzeichnet,**
**dass** die hintere Reflexionsfläche (16) eine reflektierende Beschichtung (20) aufweist.

7. Optoelektronischer Sensor (110 - 510) nach einem der vorhergehenden Ansprüche,
**dadurch gekennzeichnet,**
**dass** die Reflexionseigenschaften der Filterschicht (18) hinsichtlich ihrer Selektivität für eine Wellenlänge und/oder eine Polarisationsrichtung in Ansprechen auf ein elektrisches Steuersignal veränderbar sind.

## Claims

1. An optoelectronic sensor (110 - 510) comprising a light entry opening and at least one light receiver (24, 24.1, 24.2) for detecting reception light signals and for converting the reception light signals into electrical reception signals, wherein a reception light path, which has a deflection element (112 - 512) having a front and a rear reflection surface (14, 16), extends between the light entry opening and the at least one light receiver (24, 24.1, 24.2), wherein the deflection element (112 - 512) is configured such that some of the reception signals are reflected at the front reflection surface (14) and the remaining reception signals are reflected at the rear reflection surface (16), wherein the front reflection surface (14) at least partly has a filter layer (18) which reflects or transmits reception light signals in dependence on their wavelength and/or polarization direction,
wherein the optoelectronic sensor (110 - 510) comprises a first and a second light receiver (24.1, 24.2), with the light receivers (24.1, 24.2) and the deflection element (112 - 512) being designed and arranged in such a manner that reception light signals reflected at the front reflection surface (14) are detected by the first light receiver (24.1) and reception light signals reflected at the rear reflection surface (16) are detected by the second light receiver (24.2),
**characterized in that**
reception light signals which are reflected at the rear reflection surface are transmitted twice by the front reflection surface, namely on the outward path towards and on the return path from the rear reflection surface, and
**in that** the front reflection surface (14) and the rear reflection surface (16) extend inclined with respect to one another.

2. An optoelectronic sensor (110 - 510) according to claim 1,
**characterized in that**
the filter layer (18) is only provided on at least one part region of the front reflection surface (14).

3. An optoelectronic sensor (110 - 510) according to one of the preceding claims,
**characterized in that**
the front reflection surface (14) and the rear reflection surface (16) are planar.

4. An optoelectronic sensor (110 - 510) according to claim 1 or 2,
**characterized in that**
at least one of the reflection surfaces (14, 16), preferably the rear reflection surface (16), is curved, preferably concave.

5. An optoelectronic sensor (110 - 510) according to any one of the preceding claims,
**characterized in that**
the deflection angle at which the reception light signals are deflected is 90° or 180°.

6. An optoelectronic sensor (110 - 510) according to any one of the preceding claims,
**characterized in that**
the rear reflection surface (16) has a reflective coating (20).

7. An optoelectronic sensor (110 - 510) according to any one of the preceding claims,
**characterized in that**
the reflection properties of the filter layer (18) can be varied with respect to their selectivity for a wavelength and/or a polarization direction in response to an electrical control signal.

## Revendications

1. Capteur optoélectronique (110 - 510) présentant une ouverture d'entrée de lumière et au moins un récepteur de lumière (24, 24.1, 24.2) pour détecter des signaux lumineux de réception et pour convertir les signaux lumineux de réception en signaux électriques de réception, un chemin de lumière de réception s'étendant entre l'ouverture d'entrée de lumière et ledit au moins un récepteur de lumière (24, 24.1, 24.2) et présentant un élément de déviation (112 - 512) ayant des surfaces de réflexion avant et arrière (14, 16), l'élément de déviation (112 - 512) étant conçu de telle sorte qu'une partie des signaux de réception est réfléchie sur la surface de réflexion avant (14) et qu'une autre partie des signaux de réception est réfléchie sur la surface de réflexion arrière (16),
dans lequel
la surface de réflexion avant (14) présente au moins partiellement une couche filtrante (18) qui réfléchit ou laisse passer les signaux lumineux de réception en fonction de leur longueur d'onde et/ou de leur direction de polarisation,
le capteur optoélectronique (110 - 510) comprend un premier et un deuxième récepteur de lumière (24.1, 24.2), les récepteurs de lumière (24.1, 24.2) et l'élément de déviation (112 - 512) étant conçus et disposés de telle sorte que des signaux lumineux de réception réfléchis sur la surface de réflexion avant (14) sont détectés par le premier récepteur de lumière (24.1) et que des signaux lumineux de réception réfléchis sur la surface de réflexion arrière (16) sont détectés par le deuxième récepteur de lumière (24.2),
**caractérisé en ce que**
la surface de réflexion avant laisse passer deux fois les signaux lumineux de réception réfléchis sur la surface de réflexion arrière, à savoir une fois à l'aller vers la surface de réflexion arrière et une fois au retour depuis celle-ci, et
**en ce que** la surface de réflexion avant (14) et la surface de réflexion arrière (16) sont inclinées l'une par rapport à l'autre.

2. Capteur optoélectronique (110 - 510) selon la revendication 1,
**caractérisé en ce que**
la couche filtrante (18) n'est prévue que sur au moins une zone partielle de la surface de réflexion avant (14).

3. Capteur optoélectronique (110 - 510) selon l'une des revendications précédentes,
**caractérisé en ce que**
la surface de réflexion avant (14) et la surface de réflexion arrière (16) sont planes.

4. Capteur optoélectronique (110 - 510) selon la revendication 1 ou 2,
**caractérisé en ce que**
l'une au moins des surfaces de réflexion (14, 16), de préférence la surface de réflexion arrière (16), est bombée, de préférence concave.

5. Capteur optoélectronique (110 - 510) selon l'une des revendications précédentes,
**caractérisé en ce que**
l'angle de déviation selon lequel les signaux lumineux de réception sont déviés est de 90° ou de 180°.

6. Capteur optoélectronique (110 - 510) selon l'une des revendications précédentes,
**caractérisé en ce que**
la surface de réflexion arrière (16) présente un revêtement réfléchissant (20).

7. Capteur optoélectronique (110 - 510) selon l'une des revendications précédentes,
**caractérisé en ce que**
les propriétés de réflexion de la couche filtrante (18) peuvent être modifiées en ce qui concerne leur sélectivité pour une longueur d'onde et/ou pour une direction de polarisation en réponse à un signal de commande électrique.
